Europäisches Patentamt

(19) European Patent Office

Office européen des brevets

(11) Numéro de publication : **0 451 014 A1**

(12) **DEMANDE DE BREVET EUROPEEN**

(21) Numéro de dépôt : **91400796.8**

(22) Date de dépôt : **25.03.91**

(51) Int. Cl.⁵ : **C04B 28/00,** C04B 35/66, B29C 33/38, // (C04B28/00, 14:06, 14:32, 14:34, 14:48, 24:20), (C04B28/00, 14:06, 14:32, 14:34, 14:48, 22:16)

(30) Priorité : **02.04.90 FR 9004193**

(43) Date de publication de la demande : **09.10.91 Bulletin 91/41**

(84) Etats contractants désignés : **BE CH DE ES FR GB IT LI NL SE**

(71) Demandeur : **SAVOIE REFRACTAIRES** 10 rue de l'industrie B.P. 1 F-69631 Venissieux Cédex (FR)

(72) Inventeur : **Thiery, Jacques** 15, allée de la Bure, Domaine Plein Soleil F-54270 Essey lès Nancy (FR) Inventeur : **Schoennahl, Jacques** 4, allée Marcel Achard F-69100 Villeurbanne (FR)

(74) Mandataire : **Le Guen, Gérard et al** CABINET LAVOIX 2, place d'Estienne d'Orves F-75441 Paris Cédex 09 (FR)

(54) Composition de béton pour la fabrication de moules, moule et procédé de fabrication d'un moule.

(57) Composition de béton composite pour la fabrication de moules, caractérisée en ce qu'elle comprend : (1) un liant qui comporte une substance minérale alcalino-terreuse, un constituant formé de particules fines d'un composé autre qu'un oxyde, présentant à 90% une granulométrie comprise entre 1 et 150 μm avec un diamètre médian compris entre 3 et 20 μm, ces particules fines comprenant des particules d'une matière ayant une conductibilité thermique supérieure à environ 30 W/m.°K, choisies parmi les carbures de silicium, les carbonitrures de silicium, les nitrures de silicium, les carbures de bore, les carbures de titane et les carbures de tungstène et un constituant formé de particules ultrafines présentant au moins à 70% une granulométrie inférieure à 1 μm avec un diamètre médian compris entre 0,3 et 0,8 μm, (2) de l'eau éventuellement additionnée d'un dispersant et (3) des charges comportant des granulats métalliques et des fibres métalliques, le rapport eau/liant étant inférieur à 0,20, la composition de béton présentant une conductibilité thermique à 200°C égale ou supérieure à 5 W/m.°K.

EP 0 451 014 A1

Jouve, 18, rue Saint-Denis, 75001 PARIS

La présente invention se rapporte à une composition de béton composite pour la fabrication de moules, destinés en particulier au moulage de pièces en matière plastique.

Des moules en béton métallisé ont été proposés pour rendre plus économique le moulage de pièces en matière plastique, en particulier, de grandes dimensions, telles que des éléments de carrosserie pour véhicules automobiles.

Les bétons composites qui entrent dans la constitution de ces moules doivent réunir différentes propriétés. Ils doivent en premier lieu assurer une bonne conductibilité thermique, dans la mesure où ces moules sont chauffés et/ou refroidis au cours de l'opération de moulage.

En second lieu, ils doivent posséder des propriétés mécaniques assurant une bonne ductilité et une résistance à la flexion satisfaisante dans la mesure où les moules supportent au cours de leur utilisation un travail mécanique important.

Enfin, ils doivent présenter un coefficient de dilatation approprié, compatible avec celui du revêtement métallique du moule et éventuellement celui d'éléments métalliques nécessaires au moulage et dont une partie au moins est noyée dans le béton.

La présente invention a pour but de proposer une composition présentant à un degré élevé les propriétés indiquées plus haut, et donc convenant particulièrement bien à la confection des moules en béton métallisé.

La présente invention a ainsi pour objet composition de béton composite pour la fabrication de moules, caractérisée en ce qu'elle comprend : (1) un liant qui comporte une substance minérale alcalino-terreuse choisie parmi les laitiers sidérurgiques d'aluminate de calcium ou de silico-aluminate de calcium, les ciments alumineux des types mono-aluminate de calcium et di-aluminate de calcium, les ciments silico-alumineux, les silicates de calcium ou de baryum, et les oxydes alcalino-terreux préalablement calcinés à très haute température du groupe de la magnésie, de la dolomie, de la chaux et de la baryte, un constituant formé de particules fines d'un composé autre qu'un oxyde, présentant à 90% une granulométrie comprise entre 1 et 150 μm avec un diamètre médian compris entre 3 et 20 μm, ces particules fines comprenant des particules d'une matière ayant une conductibilité thermique supérieure à environ 30 W/m.°K, choisies parmi les carbures de silicium, les carbonitrures de silicium, les nitrures de silicium, les carbures de bore, les carbures de titane et les carbures de tungstène et un constituant formé de particules ultrafines présentant au moins à 70% une granulométrie inférieure à 1 μm avec un diamètre médian compris entre 0,3 et 0,8 μm, (2) de l'eau éventuellement additionnée d'un dispersant et (3) des charges comportant des granulats métalliques et des fibres métalliques, le rapport eau/liant étant inférieur à 0,20, la composition de béton présentant une conductibilité thermique à 200°C égale ou supérieure à 5 W/m.°K.

La conductibilité thermique de 30W/m.°K des particules fines est nettement supérieure à celle des particules fines présentes dans les ciments habituellement utilisés.

De manière avantageuse, les particules fines ont en outre une haute dureté, de préférence d'au moins 1800 kg/mm² en dureté KNOOP.

Les granulats métalliques sont choisis de préférence parmi les grenailles en acier, en acier inoxydable, en fonte, en cuivre et tout métal ou alliage compatible chimiquement avec le liant.

Les fibres métalliques sont avantageusement des fibres en acier ou acier inoxydable.

L'invention a également pour objet un moule comportant deux demi-moules en béton métallisé, destiné en particulier au moulage de pièces, de préférence de grandes dimensions, en matière plastique comprenant une composition de béton composite telle que définie précédemment.

L'invention a également pour objet un procédé de fabrication d'un moule constitué de deux demi-moules selon l'invention comprenant les étapes suivantes :
– réalisation de maître-modèles des demi-moules à partir d'une résine,
– métallisation des maître-modèles,
– coulée d'un béton selon l'invention suivie d'un traitement thermique.

Avantageusement, une fois réalisée la coulée du béton, on laisse prendre le béton à une température d'environ 20°C pendant une durée de 16 à 24 heures, on enfourne dans une étuve à une température allant de la température ambiante à environ 60°C, on augmente la température jusqu'à environ 250°C à une vitesse allant de 1 à 20°C/h, on laisse à cette température pendant une durée de 6 à 18 h, on refroidit jusqu'à une température de 70 à 80°C avec une vitesse de 1 à 20°C/h et on défourne de l'étuve à cette température.

La durée de 6 à 8 heures est déterminée en fonction de la masse de la pièce à traiter.

La substance minérale constituant le liant (1) consiste de manière avantageuse en un ciment alumineux.

Les meilleures performances ont été obtenues avec un ciment SECAR 71. Il est ajouté de préférence en une proportion variant entre 10 à 30% en poids du liant.

Les particules fines présentent à 90% une granulométrie comprise entre 1 et 150 μm avec un diamètre médian compris entre 3 et 20 μm.

Elles sont ajoutées en une proportion variant de préférence entre 14 et 54% en poids du liant.

2

Les particules ultrafines présentent au moins à 70% une granulométrie inférieure à 1 µm avec un diamètre médian compris entre 0,3 et 0,8 µm. Elles sont choisies parmi la microsilice, l'oxyde de chrome, l'oxyde de titane, l'oxyde de zirconium et l'oxyde d'aluminium.

On préfère en particulier la microsilice, notamment la microsilice thermique obtenue par réduction de silicate de zirconium qui possède une surface spécifique faible et absorbe peu d'eau.

Les particules ultrafines sont ajoutées en une proportion variant de préférence entre 14 et 54% en poids du liant.

L'eau est ajoutée en une quantité telle que le rapport eau/liant soit inférieur à 0,20, de préférence inférieur à 0,16, en poids.

La quantité ajoutée est aussi faible que possible, pour limiter la porosité du béton dans la mesure où la conductibilité thermique du béton doit être élevée.

On ajoute éventuellement un dispersant choisi avantageusement parmi les hexamétaphosphates, les tripolyphosphates et les polynaphtalènes sulfonates alcalins. A cet égard, on préférera de l'hexamétaphosphate sodique ou du tripolyphosphate sodique.

Les fibres métalliques sont avantageusement en acier ou acier inoxydable.

Leur diamètre est compris de préférence entre 80 µm et 150 µm et leur longueur entre 2 mm et 5 mm.

La gamme de composition de l'acier est la suivante :

|  | C(%) | Mn(%) | Si | P | S | Cr | Mo |
|---|---|---|---|---|---|---|---|
| acier | 0,05-0,012 | 0,7-1 | 0,015-0,020 | 0,01-0,04 | --- | --- | --- |
| acier inox. | <0,07 | <1 | <1 | <0,045 | <0,03 | 16-18 | 0,9-1,2 |

Elles sont ajoutées en une proportion de 200 à 300 parties en poids, de préférence 110 à 250 pour 100 parties en poids de substance minérale alcalino-terreuse.

Les granulats métalliques sont avantageusement des grenailles rondes ou angulaires en acier, en acier inoxydable, en fonte, en cuivre ou tout métal ou alliage compatible chimiquement avec le liant, ou consistent en un mélange de ces composants, le cuivre permettant d'augmenter la conductibilité thermique du béton final, la fonte étant préférée pour des raisons de coût et pour ses propriétés mécaniques.

Les granulats métalliques ont une granulométrie comprise entre 90 µm et 850 µm et sont choisis de préférence dans une ou plusieurs des plages suivantes :
— première plage : granulométrie comprise entre 90 et 425 µm, dont 70% des grenailles entre 180 et 355 µm;
— seconde plage : granulométrie comprise entre 125 et 600 µm, dont 70% des grenailles entre 300 et 500 µm;
— troisième plage : granulométrie comprise entre 90 et 425 µm, dont 65% des grenailles entre 180 et 425 µm.

Les grenailles en fonte sont choisies notamment parmi les grenailles en hématite de dureté 50-70 Rc, dont la phase principale est de la cémentite et la composition en C, P et S respectivement de 3%, 0,1% et 0,1%, les grenailles en fonte "super rapide" de dureté 65-67 Rc, dont la phase principale est de la cémentite, et la composition en C, P, S respectivement de 3%, 0,1% et 0,1%.

Parmi les grenailles en acier, on préfère les grenailles commercialisées par la société WHEELABRATOR-ALLEVARD.

Les granulats métalliques sont ajoutés en une proportion de 600 à 800 parties, de préférence 660 à 780 parties pour 100 parties en poids de substance minérale alcalino-terreuse.

Le béton fini présente les propriétés suivantes après traitement thermique à 250°C tel que décrit plus haut.
— contrainte à la rupture en compression $\sqrt{c}$ supérieure ou égale à 160 MPa
— contrainte à la rupture en flexion $\sqrt{f}$
  . limite de proportionalité ou limite d'élasticité LOP supérieure ou égale à 25 MPa
  . contrainte à la rupture MOR supérieure ou égale à 30 MPa
— déformation à la rupture : $\xi$ supérieure ou égale à 0,15%
— porosité inférieure ou égale à 20%, de préférence à 16%
— conductibilité thermique à 200°C : supérieure ou égale à 5,0 W/m.°K.

On donnera ci-après des exemples de formulation d'un béton selon l'invention.

3

Exemple 1

|  | % en poids | parties en poids |
|---|---|---|
| Grenaille inox (0,105 à 0,210 mm) | 48,7 | 696 |
| Fibres acier (3 mm - ⌀ 0,150 mm) | 16,3 | 232 |
| SiC rebroyé (1 à 150 µm) | 17,5 | 250 |
| Microsilice (0,01 à 4 µm; diamètre médian 0,7 µm; granulo- métrie : 90% ≤4µm et 10% <0,2µm) | 10,5 | 150 |
| Ciment Secar 71 | 7 | 100 |
| Tripolyphosphate de Na | + 0,25 | 3,6 |
| Eau (%) |  | 75 |

Le béton est coulé-vibré puis laissé à l'air ambiant pendant 24 heures pour assurer sa prise hydraulique avant le traitement thermique.

Exemple 2

On a par ailleurs préparé une formulation de béton en reprenant les mêmes constituants qu'à l'exemple 1 excepté que la grenaille d'acier inoxydable était remplacée par 696 parties de grenaille de fonte S70 (granulométrie 90 à 425 µm), l'eau étant ajoutée à raison de 68,6 parties pour 100 parties de ciment Secar 71.

Les propriétés des bétons des exemples 1 et 2 sont récapitulées dans le tableau ci-dessous :

Elles ont été mesurées sur des éprouvettes de dimension 4 x 4 x 16 cm (*) et 200x80x10 mm (**).

|  | Ex. 1 | Ex. 2 |
|---|---|---|
| * Densité | 3,90 | 3,63 |
| * Porosité AFNOR (%) | 16 | 10,7 |
| * $\sigma_c$ (MPa) | 196 | 209 |
| ** MOR (MPa) ⎫ mesures | 41 | 45 |
| ** LOP (MPa) ⎬ en | 33,5 | 37 |
| ** ε (%) ⎭ flexion | 0,23 | 0,28 |
| * Conductibilité thermique W/m·K | 5,00 | 6,20 |

Tous les paramètres ont été mesurés après étuvage à + 240°C à 250°C.


**Revendications**

1. Composition de béton composite pour la fabrication de moules, caractérisée en ce qu'elle comprend : (1) un liant qui comporte une substance minérale alcalino-terreuse choisie parmi les laitiers sidérurgiques d'aluminate de calcium ou de silico-aluminate de calcium, les ciments alumineux des types mono-aluminate de calcium et di-aluminate de calcium, les ciments silico-alumineux, les silicates de calcium ou de baryum, et les oxydes alcalino-terreux préalablement calcinés à très haute température du groupe de la magnésie, de la dolomie, de la chaux et de la baryte, un constituant formé de particules fines d'un composé autre qu'un oxyde, présentant à 90% une granulométrie comprise entre 1 et 150 μm avec un diamètre médian compris entre 3 et 20 μm, ces particules fines comprenant des particules d'une matière ayant une conductibilité thermique supérieure à environ 30 W/m.°K, choisies parmi les carbures de silicium, les carbonitrures de silicium, les nitrures de silicium, les carbures de bore, les carbures de titane et les carbures de tungstène et un constituant formé de particules ultrafines présentant au moins à 70% une granulométrie inférieure à 1 μm avec un diamètre médian compris entre 0,3 et 0,8 μm, (2) de l'eau éventuellement additionnée d'un dispersant et (3) des charges comportant des granulats métalliques et des fibres métalliques, le rapport eau/liant étant inférieur à 0,20, la composition de béton présentant une conductibilité thermique à 200°C égale ou supérieure à 5 W/m°K.

2. Composition de béton selon la revendication 1, caractérisée en ce que les particules fines sont choisies parmi des particules ayant une dureté d'au moins 1800 kg/mm$^2$ en dureté KNOOP.

3. Composition de béton selon la revendication 1 ou la revendication 2, caractérisée en ce que les particules ultrafines sont choisies parmi la microsilice, l'oxyde de chrome, l'oxyde de titane, l'oxyde de zirconium et l'oxyde d'aluminium, de préférence la microsilice.

4. Composition de béton selon la revendication 1 ou 2, caractérisée en ce que les granulats métalliques sont choisis parmi les grenailles en acier inoxydable, en fonte, en cuivre et tout métal ou alliage compatible chimiquement avec le liant, ainsi que parmi les mélanges de ces composants.

5. Composition de béton selon l'une quelconque des revendications précédentes, caractérisée en ce que les fibres métalliques sont des fibres d'acier ou d'acier inoxydable.

6. Composition de béton selon l'une quelconque des revendications précédentes, caractérisée en ce que la substance minérale alcalino-terreuse est un ciment alumineux.

7. Composition de béton selon l'une quelconque des revendications précédentes, caractérisée en ce que le dispersant est choisi parmi les tripolyphosphates, les hexamétaphosphates et les polynaphtalène sulfonates alcalins, de préférence le tripolyphosphate de Na et l'hexamétaphosphate de Na.

8. Composition de béton selon l'une quelconque des revendications précédentes, caractérisée en ce que le liant (1) comprend de 10 à 30% d'une substance alcalino-terreuse choisie parmi les laitiers sidérurgiques d'aluminate de calcium ou de silico-aluminate de calcium, les ciments alumineux des types mono-aluminate de calcium et di-aluminate de calcium, les ciments silico-alumineux, les silicates de calcium ou de baryum, et les oxydes alcalino-terreux préalablement calcinés à très haute température du groupe de la magnésie, de la dolomie, de la chaux et de la baryte; de 14 à 54% de particules fines présentant à 90% une granulométrie comprise entre 1 et 150 µm avec un diamètre médian compris entre 3 et 20 µm, et de 14 à 54% de particules ultrafines présentant au moins à 70% une granulométrie inférieure à 1 µm avec un diamètre médian compris entre 0,3 et 0,8 µm.

9. Composition de béton selon l'une quelconque des revendications précédentes, caractérisée en ce qu'elle comprend pour 100 parties de substance alcalino-terreuse choisie parmi les laitiers sidérurgiques d'aluminate de calcium ou de silico-aluminate de calcium, les ciments alumineux des types mono-aluminate de calcium et di-aluminate de calcium, les ciments silico-alumineux, les silicates de calcium ou de baryum, et les oxydes alcalino-terreux préalablement calcinés à très haute température du groupe de la magnésie, de la dolomie, de la chaux et de la baryte, de 200 à 300 parties, de préférence de 110 à 250 parties, de fibres métalliques et de 600 à 800 parties, de préférence de 660 à 780 parties, de granulats métalliques.

10. Composition de béton selon l'une quelconque des revendications précédentes, caractérisée en ce que le rapport eau/liant est inférieur à 0,16.

11. Moule constitué de deux demi-moules en béton métallisé caractérisé en ce qu'il comprend une composition de béton telle que définie dans l'une quelconque des revendications précédentes.

12. Procédé de fabrication d'un moule selon la revendication 11, caractérisé en ce qu'il comprend les étapes suivantes :
    – réalisation de maître-modèles des demi-moules à partir d'une résine
    – métallisation des maître-modèles
    – coulée d'un béton tel que défini dans l'une quelconque des revendications 1 à 10, suivie d'un traitement thermique.

13. Procédé selon la revendication 12, caractérisé en ce qu'après la coulée du béton, on laisse prendre le béton à une température d'environ 20°C pendant une durée de 16 à 24 heures, on enfourne dans une étuve à une température allant de la température ambiante à environ 60°C, on augmente la température jusqu'à environ 250°C à une vitesse allant de 1 à 20°C/h, on laisse à cette température pendant une durée de 6 à 18 h, on refroidit jusqu'à une température de 70 à 80°C avec une vitesse de 1 à 20°C/h et on défourne de l'étuve à cette température.

**Office européen des brevets**

# RAPPORT DE RECHERCHE EUROPEENNE

Numero de la demande

EP 91 40 0796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 273 181 (CEMCON CORP.)<br>* Résumé; page 2, lignes 36-37; page 3, lignes 22-30; page 4, tableau; page 5, lignes 29-30,44-52 *<br>--- | 1-8,10, 11 | C 04 B 28/00<br>C 04 B 35/66<br>B 29 C 33/38 //<br>(C 04 B 28/00 |
| P,X | US-A-4 915 740 (E. SAKAI et al.)<br>* Colonne 1, lignes 44-50; colonne 2, lignes 25-33; colonne 3, lignes 1-15,24-30,38-40; colonne 4, lignes 10-13,26-29; colonne 5, lignes 26-34,45-50; colonne 6, lignes 9-31 *<br>--- | 1-6,8, 13 | C 04 B 14:06<br>C 04 B 14:32<br>C 04 B 14:34<br>C 04 B 14:48<br>C 04 B 24:20 )<br>(C 04 B 28/00<br>C 04 B 14:06 |
| P,A | FR-A-2 640 962 (SOGEA)<br>* Résumé; page 2, lignes 24-33; page 3, lignes 1-36; page 4, lignes 1-4,31-34 *<br>--- | 1-5,7, 13 | C 04 B 14:32<br>C 04 B 14:34<br>C 04 B 14:48<br>C 04 B 22:16 ) |
| A | WO-A-8 600 612 (S. KOMATSU)<br>--- | | |
| A | AT-A- 380 006 (E. PETSCHNIG)<br>--- | | |
| A | FR-A-2 387 924 (MORGAN THERMIC)<br>----- | | |

**DOMAINES TECHNIQUES RECHERCHES (Int. Cl.5)**

C 04 B 28
C 04 B 35
B 29 C

Le présent rapport a été établi pour toutes les revendications

| Lieu de la recherche | Date d'achèvement de la recherche | Examinateur |
|---|---|---|
| LA HAYE | 18-06-1991 | DAELEMAN P.C.A. |